Europäisches Patentamt

European Patent Office

Office européen des brevets

(19)

(11) Veröffentlichungsnummer: **0 173 803**
**B1**

(12) **EUROPÄISCHE PATENTSCHRIFT**

(45) Veröffentlichungstag der Patentschrift: 09.05.90

(21) Anmeldenummer: 85107276.9

(22) Anmeldetag: 12.06.85

(51) Int. Cl.⁵: **F 01 D 5/02,** F 02 C 3/16

(54) Strömungsmaschine.

(30) Priorität: 05.09.84 DE 3432683

(43) Veröffentlichungstag der Anmeldung:
12.03.86 Patentblatt 86/11

(45) Bekanntmachung des Hinweises auf die
Patenterteilung:
09.05.90 Patentblatt 90/19

(84) Benannte Vertragsstaaten:
AT BE CH DE FR GB IT LI LU NL SE

(56) Entgegenhaltungen:
EP-A-0 104 413
DE-A-2 918 328
DE-A-3 016 817
FR-A-1 594 147
US-A-2 028 603
US-A-2 704 645
US-A-3 015 524

(73) Patentinhaber: LATIMER N.V.
De Ruyterkade 62 P.O. Box 812
Curaçao Netherlands Antilles (NL)

(72) Erfinder: Cascajosa, Felix Garcia
Calle Padre Damian 37 Appartement 3h
Madrid (ES)

(74) Vertreter: Patentanwälte Grünecker, Kinkeldey,
Stockmair & Partner
Maximilianstrasse 58
D-8000 München 22 (DE)

Courier Press, Leamington Spa, England.

**Beschreibung**

Die Erfindung betrifft eine Strömungsmaschine nach dem Oberbegriff des Anspruches 1.

Eine derartige Strömungsmaschine ist aus der US—A—2 704 645 bekannt und weist eine Gasturbine mit einem stationären Zylinder auf, der von einem drehenden Zylinder umgeben ist. Hierbie ist der stationäre Zylinder über eine Mehrzahl von Streben am Körper eines Flugzeuges befestigt. Der rotierende Zylinder ist zwischen dem am Flugzeugkörper befestigten stationären Zylinder und einem weiteren äußeren stationären Zylinder angeordnet und koaxial zu diesen ausgerichtet. Ein weiterer Zylinder, der einen Teil der Außenwand einer Brennkammer bildet, ist mit dem inneren stationären Zylinder über Streben verbunden. Dieser einen Teil der Außenwand der Brennkammer bildende Zylinder kann unter Bildung eines engen Luftspaltes zum drehenden Zylinder angeordnet sein, wodurch ein Kühleffekt erreichbar sein soll. Daher können die Streben, die den Zylinder der Brennkammer lagern, nicht als Lagerstreben für den drehenden Zylinder am stationären inneren Zylinder dienen, da dem rotierenden Zylinder bei Vorsehen des genannten Luftspaltes die Lagerung genommen wäre. Die ferner beschriebenen Öldichtungen können ebenfalls nicht zu einer Lagerung des drehenden Zylinders herangezogen werden, auf die in der gattungsbildenden Drucksschrift nicht im einzelnen eingegangen worden ist.

Eine weitere Strömungsmaschine ist aus der EP—A—0 104 413, Ausführungsform gemäß dortiger Fig. 9 bis 13 bekannt. Bei dieser bekannten Maschine handelt es sich um einen mehrstufigen Verdichter, der als Durchströmverdichter ausgebildet ist. Diese Maschine weist ein umlaufendes Gehäuse auf, das im Beispielsfalle durch Wälz-, Gleit- oder Magnetlager gelagert ist. An der Innenseite des Gehäuses sind radial sich nach innen erstreckende Schaufeln angeordnet. Innerhalb des Gehäuses ist eine feststehende Halterung angeordnet, die mit feststehenden radial sich nach außen erstreckenden Leitschaufeln versehen ist. Schließlich weist der in Fig. 10 dieser Druckschrift dargestellte Verdichter Zuführungs- bzw. Austrittsleitungen in Form von Rohren auf, die gegenüber dem umlaufenden Gehäusezylinder mittels jeweils eine Labyrinthdichtung abgedichtet sind. Diese Strömungsmaschine ist jedoch insoweit verbesserungsbedürftig, als die Kompaktheit der Anordnung unter der am Außenumfang des Rotors erforderlichen Lagerung leidet, so daß es unter bestimmtem räumlichen Verhältnissen schwierig bzw. sogar unmöglich sein kann, die bekannte Strömungsmaschine zur Anwendung zu bringen.

Schließlich ist aus der DE—A—2 918 328 eine Strömungsmaschine in Form einer Mantelgasturbine bekannt, die eine zentrisch angeordnete drehende Welle aufweist, die über Lager an einer ortsfesten Halerung drehbar gelagert ist. Auf der Verdichterwelle sind Verdichterschaufeln angeordnet, die radial nach außen weisen, wobei ein Verdichtermantel auf den Verdichterlaufschaufeln aufliegt. Hierdurch soll erreicht werden, daß der Verdichtermantel sich auf den Verdichterlaufschaufelgrenzen abstützt, wodurch er von diesen zentriert und gehalten werden soll, was wiederum dazu führt, daß die Lager des Verdichters auch die Lager der Turbine sind. Hierbei stellt das Teil, das gemäß Abbildung 9 der genannten Veröffentlichung zur Brennstoffzuführung dienen soll, die Verdichterwelle dar, die im Zentrum der Maschine angeordnet ist und daher die feststehende Achse der bekannten Maschine nicht umgibt, die von einem rohrförmigen Element gebildet wird, innerhalb dessen die Verdichterwelle angeordnet ist und innerhalb dessen die Verdichterwelle über zwei Lager drehbar gelagert ist. Dieses Teil steht fest, da es mit dem Teil verbunden ist, das in Abbildung 9 der DE—A—2 918 328 mit Turbinenhalterung bezeichnet ist. Des weiteren wird aus Abbildung 9 dieser Druckschrift deutlich, daß a rechten Ende der Verdichterwelle eine Laufschaufel angeordnet ist, deren Drehung auf das außenliegende Gehäuse übertragen wird, wobei offenbar ein links angeordnetes Turbinenlaufrad über ein Lager auf dem zylindrischen Teil abgestützt ist, das die Verdichterwelle lagert. Daher stelt die beschriebene Mantelgasturbine keine gattungsgemäße Strömungsmaschine dar, bei der die Lagerung des Läufers nicht an der zentrischen Achse vorgenommen wird.

Es ist Aufgabe der vorliegenden Erfindung, eine Strömungsmaschine der im Oberbegriff des Anspruches 1 angegebenen Art zu schaffen, deren Abmessungen kompakt sind und die bei betriebssicherer und zuverlässiger Wirkungsweise zudem eine einfache und kostengünstige Ausgestaltung und Herstellung der Laufschaufeln und des Läufers ermöglicht.

Die Lösung dieser Aufgabe erfolgt durch die Merkmale des Anspruches 1.

Eine derartige erfindungsgemäße Strömungsmaschine weist gegenüber den Strömungsmaschinen nach dem Stand der Technik erhebliche Vorteile auf. Durch die Anordnung der Laufschaufeln an einem um eine im wesentlichen zur Durchströmungsrichtung zentrischen Achse treten bei Drehung des Läufers, hervorgerufen durch die Zentrifugalkraft, in den Laufschaufeln im wesentlichen nur Druckkräfte auf. Die Übertragung von Druckkräften setzt jedoch keine Anwendung von hochfesten Legierungen voraus, da die meisten Legierungen eine wesentliche höhere Druckfestigkeit als eine entsprechende Zugfestigkeit aufweisen. Damit ergibt sich eine wesentlichen Verbilligung der Laufschaufeln, da derartige, nur auf Druck zu belastende Materialen weitaus kostengünstiger herzustellen und zu verarbeiten sind. Weiterhin kann die Ausgestaltung des Schaufelfußes der jeweiligen Laufschaufel in ganz erheblichem Maß vereinfacht werden, da auch dieser Schaufelfuß im wesentlichen nur Druckkräfte auf den Läufer übertragen muß. Ein derartig vereinfachter Schaufelfuß bringt, in Verbindung mit einer einfacheren Ausbildung der Laufschaufel, eine erhebliche Verminderung des Herstellungsaufwands und der dadurch hervorgerufenen Kosten. Eine weiterer Vorteil einer derartig ausgestalteten Strömungsmaschine ergibt sich daraus, daß die an ihren innenliegenden Enden im wesentlichen freien Laufschaufeln durch die Zentripetalkraft in ihrer jeweiligen Position gehalten werden, so daß die zur Dämpfung von Bewegungen der Schaufelenden notwendigen Maßnahmen auf ein Minimum reduziert werden können. Die Befestigung der Leitschaufeln an einer feststehenden, zur Durchströmungsrichtung zentrischen Achse und die Ausgestaltung dieser Leitschaufeln ist ebenfalls mit erheblich geringerem Aufwand verbunden, da die Leitschaufeln in einfacher Weise am Außenumfang der zentrischen Achse angeordnet werden können und auf diese Weise die Montage- und Justiervorgänge einfacher durchzuführen sind und weniger aufwendige Vorrichtungen erfordern.

Mit Vorteil ist die erfindungsgemäße Strömungsmaschine auch so ausgebildet, daß die zentrische Achse rohrförmig ausgestaltet ist. Auf diese Weise ist es möglich, bei Erhöhung der Festigkeit das Gewicht der gesamten Strömungsmaschine zu reduzieren.

In vorteilhafter Weise ist die erfindungsgemäße Strömungsmaschine weiterhin so ausgestaltet, daß im Inneren der zentrischen Achse Treibstoffleitungen und/oder elektrische Leitungen vorgesehen sind. Derartige, im inneren der feststehenden zentrischen Achse verlaufende Leitungen sind vor störenden äußeren Einflüssen in sicherer Weise geschützt. Weiterhin ergibt sich eine Verringerung des Bauvolumens der Strömungsmaschine, da bei den nach dem Stand der Technik bekannten Maschinen die Vorsorgungsleitungen zusätzlich am Außenumfang der Strömungsmaschine angeordnet werden mußten.

Mit Vorteil ist die erfindungsgemäße Strömungsmaschine weiterhin so ausgebildet, da die zentrische Achse in ihrem Inneren kühlbar ist. Damit ist es möglich, einen direkten Einfluß auf die in der Strömungsmaschine vorliegenden Temperaturen auszuüben und insbesondere die Leitschaufeln einfach und wirksam zu kühlen.

In besonders vorteilhafter Weise ist die erfindungsgemäße Strömungsmaschine so ausgestaltet, daß der drehbare Läufer mittels mindestens einem am jeweiligen radial inneren Ende der Laufschaufeln angeordneten Lager an der zentralen Achse gelagert ist. Eine derartige Lagerung des Läufers nützt die konstruktiv bedingte Festigkeit der Laufschaufeln aus, um eine Lagerung des Lagerung des Läufers vorzusehen. Außerdem ist es bei einer derartigen Lagerung nicht nötig, zusätzliche Bauteile im Strömungsquerschnitt vorzusehen, welche das Durchströmungsverhalten der Strömungsmaschine beeinflussen können.

Mit Vorteil ist die erfindungsgemäße Strömungsmaschine auch so ausgestaltet, daß der drehbare Läufer mittels radial im Strömungsquerschnitt angeordneter Streben an der zentrischen Achse gelagert ist. Durch derartige Streben, welche mit ihrem einen Ende entweder am dem Läufer oder an der zentrischen Achse befestigt sind und an ihrem anderen Ende ein entsprechende ausgebildetes Lager tragen, läßt sich eine Lagerung des Läufers relativ zu der zentrischen Achse verwirklichen, welche unabhängig von der Ausgestaltung und Festigkeit der Leitschaufeln oder der Laufschaufeln ist. Somit ist es möglich, die Schaufeln entsprechend gering zu dimensionieren.

In besonders vorteilhafter Weise ist die erfindungsgemäße Strömungsmaschine in Form eines Strahltiebwerks ausgebildet, welches einen Axialverdichter, eine nachgeschaltete Brennkammer und eine Axialturbine umfaßt. Ein derartiges Strahltriebwerk, welches bevorzugterweise zum Antrieb eines Luftfahrzeugs dient, zeichnet sich durch eine geringe Baugröße, ausgesprochen geringe Herstellungkosten und durch hohe Zuverlässigkeit aus. Im Zusammenhang mit den oben aufgeführten Vorteilen erweist es sich als besonders positiv, daß der Läufer eine sehr große Außenoberfläche aufweist, durch welche eine entsprechende Kühlung des Läufers und der mit ihm verbundenen Laufschaufeln möglich ist. Die große Außenoberfläche kann dabei unter bestimmten Bedingungen eine so große Wärmeabfuhr bewirken, daß zusätzliche Kühlvorrichtung völlig überflüssig werden. Weiterhin ist die Befestigung bzw. die Montage eines derartigen, sogenannten "Strahltriebwerks mit Außenläufer" wesentlich vereinfacht, da die feststehende zentrische Achse hierfür direkt verwendet werden kann, wodurch sich eine weitere Verringerung des Gesamtgewichts des Strahltriebwerks ergibt.

Mit Vorteil ist die erfindungsgemäße Strömungsmaschine, welche in Form eines Strahltriebwerks ausgebildet ist, auch so ausgebildet, daß die Brennkammer an der zentrischen Achse befestigt ist und gegen die zentrische Achse mittels eines Hitzeschutzes isoliert ist. Eine derartige Ausgestaltung erlaubt eine besonders einfache Form der Brennkammer und gewährleistet deren sichere Befestigung. Weiterhin ist die Isolierung durch einen Hitzeschutz zu der zentrischen Achse hin mit einfachsten Mitteln und unter geringsten Kosten zu verwirklichen. Ein derartiger Hitzeschutz kann z.B. aus einem handelsüblich in Rohrform vorliegenden Isoliermaterial bestehen. Die geringen Umfangsabmessungen der feststehenden zentrischen Achse führen dazu, daß nur entsprechend wenig Isoliermaterial verwendet werden muß, wodurch sich das Gesamtgewicht des Strahltriebwerks weiter verringern läßt.

In besonders vorteilhafter Weise ist die erfindungsgemäße Strömungsmaschine mit einem Radialverdichter und/oder einer Radialturbine ausgestattet. Eine derartige Strömungsmaschine, wie sie üblicherweise für stationäre Anwendungsfälle verwendet wird, z.B. für die Stromerzeugung, weist zusammen mit den eingangs genannten Vorteilen eine ausgesprochen günstige Kostenstruktur auf und ist dadurch besonders wirtschaftlich. Die komplexe Formgebung der bei einem Radialverdichter oder einer Radialturbine benötigten Leitschaufeln bzw. Laufschaufeln wird in besonders starkem Maße vereinfacht, daß diese Schaufeln keines besonderen Schaufelfußes bzw. keiner besonderen Verankerung bedürfen, da speziell die Laufschaufeln nur auf Druck beaufschlagt werden. Durch das der erfindungsgemäßen Strömungsmaschine zugrundeliegende Prinzip lassen sich derartige stationäre Strömungsmaschinen einerseits mit besonderer Wirtschaftlichkeit herstellen, andererseits weisen sie wegen ihres geringen Gewichts und ihrer einfachen mechanischen Ausgestaltung einen hohen Wirkungsgrad auf. Durch diesen hohen Wirkungsgrad wird auch der Verbrennungsvorgang beim Betrieb der Strömungsmaschine positiv beeinflußt, wodurch auch der im Rahmen der Umweltschutzbemühungen geforderte niedrige Schadstoffausstoß auf einfache und wirtschaftliche Weise erreicht werden kann.

Mit Vorteil ist die mit einem Radialverdichter und/oder einer Radialturbine ausgestattete Strömungsmaschine auch so ausgebildet, daß die sich im wesentlichen radial erstreckenden Laufschaufeln an einem Radiallaufrad ausgebildet sind. Eine derartige Ausgestaltung erlaubt eine weitere Vereinfachung der Form der Laufschaufeln und bringt eine erhebliche Herabsetzung der an das Schaufelmaterial zu stellenden Anforderungen mit sich. Das Radiallaufrad kann in Form eines ebenen Kreisrings ausgebildet werden, da es ebenfalls im wesentlichen nur mit Druckkräften beaufschlagt wird.

Mit Vorteil ist eine erfindungsgemäße Strömungsmaschine, die mit einem Radialverdichter und/oder einer Radialturbine ausgestattet ist, auch so ausgebildet, daß die Laufschaufeln an einem Radialleitrad ausgebildet sind und die Form einer logarithmischen Spirale aufweisen, wobei sie jeweils an ihrem inneren Ende radiale zur zentrischen Achse und an ihrem äußeren Ende tangential zum Läufer ausgebildet sind. Die Kräfteverteilung an einer derartigen Leitschaufel, welche mittels eines in Form eines Kreisrings ausgebildeten Radialleitrads an der zentrischen Achse befestigt ist, gestattet auch in diesem Falle eine äußerst einfache Konstruktion der Leitschaufeln vorzusehen. Diese wird in besonderem Maße dadurch erreicht, daß die Leitschaufeln an ihrem inneren Ende radial zur zentrischen Achse verlaufen, während sie an ihrem äußeren Ende tangential zum Läufer ausgebildet sind. Diese einer logarithmischen Spirale entsprechende Form läßt sich in ausgesprochen einfacher Weise z.B. durch einen Gießvorgang erzeugen und gewährleistet einen ausgezeichneten Wirkungsgrad des Radialverdichters oder der Radialturbine.

Im folgenden wird die erfindungsgemäße Strömungsmaschine anhand zweier Ausführungsbeispiele in Verbindung mit der Zeichnung beschrieben. Dabei zeigt

Fig. 1 in schematischer Darstellung einen Schnitt durch eine in Form eines Strahltriebwerks ausgebildete erfindungsgemäße Strömungsmaschine,

Fig. 2 einen Schnitt senkrecht zur zentrischen Achse mit Blick auf ein Radialschaufelrad mit Laufschaufeln,

Fig. 3 einen Schnitt senkrecht zur zentrischen Achse mit Blick auf ein Radialleitrad mit Leitschaufeln, und

Fig. 4 einen Längsschnitt in schematischer Darstellung durch einen Teil einer mit einem Radialverdichter und/oder einer Radialturbine ausgestatteten erfindungsgemäßen Strömungsmaschine.

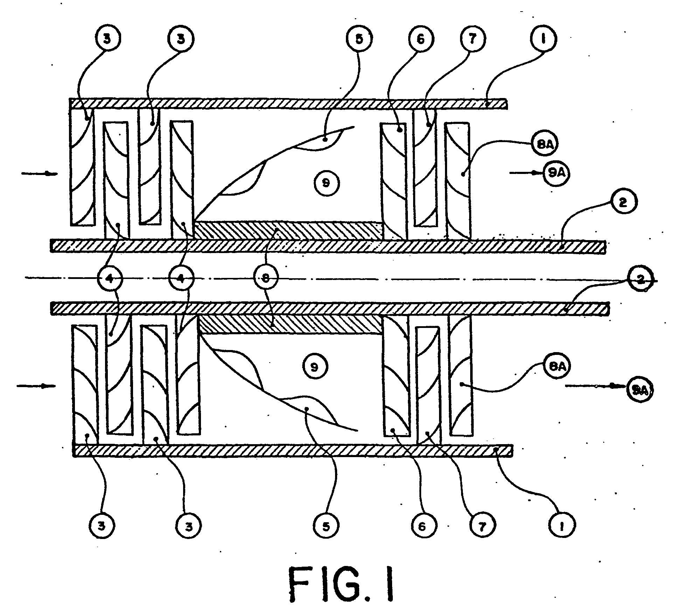

Die in Fig. 1 im schematischen Längsschnitt dargestellte Strömungsmaschine ist in Form eines Strahltreibwerks ausgebildet, welches mit, in Strömungsrichtung gesehen, einem Axialverdichter, einer nachgeschalteten Brennkammer und einer Axialturbine versehen ist. Das Strahltriebwerk weist eine feststehende zentrische Achse 2 auf, welche in nicht dargestellter Weise mittels einer entsprechenden Halterung an einem Luftfahrzeug befestigt sein kann. Die zentrische Achse 2 ist in Form eines Rohres ausgebildet. Der Innenraum des Rohres kann dabei zur Kühlung der zentrischen Achse oder zur Unterbringung von Treibstoffleitungen und/oder elektrischen Leitungen verwendet werden. An dem Außenumfang der zentrischen Achse 2 sind Leitschaufeln 4 und 6 angeordnet. Dabei sind die Leitschaufeln 4 des in der Zeichnung linken Teils, welches als Axialverdichter wirkt, in zwei Ebenen angeordnet, welche senkrecht zur zentrischen Achse stehen und zueinander einen bestimmten Abstand aufweisen. Die Befestigung der Leitschaufeln 4 an der zentrischen Achse 2 kann sowohl durch eine formschlüssige Verbindung als auch z.B. durch ein Schweißverfahren erfolgen. Die in Form eines Strahltreibwerks ausgebildete erfindungsgemäße Strömungsmaschine weist, wie in Fig. 1 schematisch dargestellt, in ihrem mittleren Bereich eine Brennkammer 5 auf, welche ebenfalls an der zentrischen Achse 2 befestigt ist. Die Brennkammer 5 kann dabei in an sich bekannter Weise ausgestaltet sind. Im Bereich der Brennkammer 5 bzw. in Bereich des dort vorliegenden, hochverdichteten heißen Gases 9 ist die zentrische Achse 2 mit einem Hitzeschutz 8 umgeben. Der Hitzeschutz 8 weist dabei eine im wesentlichen rohrförmige Gestalt auf. Nachfolgend an die Brennkammer 5 sind in zwei zur zentrischen Achse senkrechten Ebenen Leitschaufeln 6 und 8A vorgesehen. Auch diese Leitschaufeln 6, 8A sind an dem äußeren Umfang der zentrischen Achse 2 befestigt, wobei die Befestigung in ähnlicher weise erfolgen kann wie bei den Leitschaufeln 4. Die Leitschaufeln 6, 8A bilden einen Teil einer Axialturbine, wobei die Leitschaufeln 8A so ausgestaltet sind, daß sie den aus der Strömungsmaschine austretenden Gasstrom so umlenken, daß dieser im Bereich des Auslasses 9A im wesentlichen in Richtung der zentrischen Achse 2 aus der Strömungsmaschine ausströmt. Die zentrische Achse 2 wird von einem im wesentlichen rohrförmigen drehbaren Läufer 1 umgeben. Der Läufer 1 ist dabei um die feststehende zentrische Achse koaxial drehbar. An der Innenoberfläche des Läufers 1 sind Laufschaufeln 3, 7 befestigt.

Die Laufschaufeln 3, 7 sind dabei jeweils in Ebenen angeordnet, welche senkrecht zur zentrischen Achse 2 stehen. Der als Axialverdichter wirkende Teil des Strahltriebwerks weist dabei zwei in einem Abstand zueinander angeordnete Ebenen auf, in welchen die Laufschaufeln 3 angeordnet sind. Da die Laufschaufeln 3 bei Drehung des Läufers 1 im wesentlichen nur auf Druck beansprucht werden, können diese durch eine einfache formschlüssige Verbindung oder mittels eines Schweißverfahrens an dem Läufer 1 befestigt sein. Die Laufschaufeln 3, welche in zwei Ebenen angeordnet sind, sind versetzt zu den in zwei Ebenen angeordneten Leitschaufeln 4 angeordnet, so daß diese Laufschaufeln 3 mit den Leitschaufeln 4 einen zweistufigen Verdichter bilden. Die Laufschaufeln 7 sind in einer Ebene vorgesehen, welche zwischen den Ebenen der Leitschaufeln 6 und 8A angeordnet ist, so daß die Laufschaufeln 7 mit dem Leitschaufeln 6, 8A eine Axialturbine bilden. Die Lagerung des Läufers 1 ist in der schematischen Darstellung nicht gezeigt. Sie kann entweder über die Enden der Laufschaufeln 3, 7 an der zentrischen Achse 2 erfolgen, es ist jedoch auch möglich, zusätzliche, radial verlaufende Streben vorzusehen, welche entweder an dem Läufer 1 oder an der zentrischen Achse 2 befestigt sind und an ihrem anderen Ende jeweils eine entsprechende Lagereinrichtung tragen.

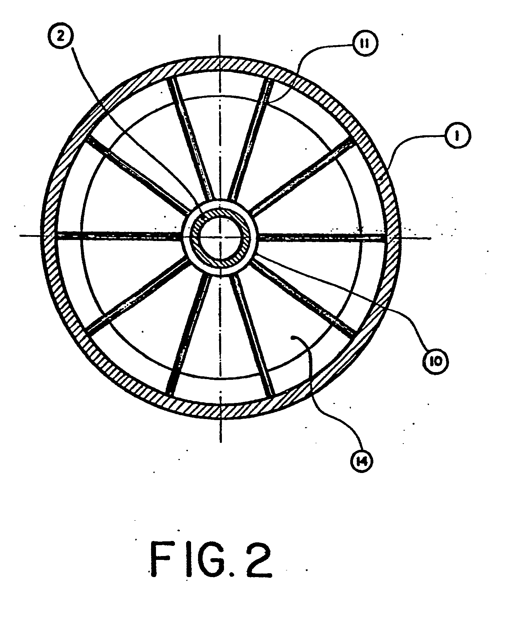

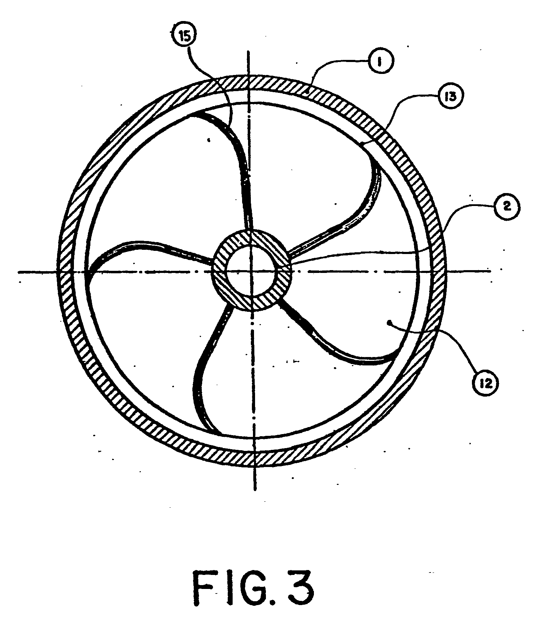

In Fig. 2 ist im Schnitt eine Ansicht in Strömungsrichtung auf ein Radiallaufrad 10 einer erfindungsgemäßen Strömungsmaschine dargestellt. Das Radiallaufrad 10 ist in nicht gezeigter Weise an dem Läufer 1 befestigt und koaxial zur Achse 2 verdrehbar. Das Radialaufrad 10 weist eine kreisringförmige Scheibe 14 auf, welche mit den sich radial erstreckenden Laufschaufeln 11 verbunden ist. In Verbindung mit einem nachfolgend in Fig. 3 beschriebenen Radialleitrad wirkt das Radiallaufrad 10 als Teil eines Radialverdichters oder einer Radialturbine. Die radial verlaufende Form der Laufschaufeln 11 bewirkt, daß diese bei Drehung des Läufers 1 nur auf Druck beaufschlagt werden. Daraus ergibt sich, wie bereits beschrieben, eine besonders einfache Ausgestaltung der Laufschaufeln 11 und deren Befestigung an dem Läufer 1. Die Laufschaufeln 11 bzw. das Radiallaufrad 10 können dementsprechend entweder durch eine formschlüssige Verbindung oder z.B. durch ein Schweißverfahren mit dem Läufer 1 verbunden sein.

In Fig. 3 ist in schematischer Weise eine Draufsicht, entgegen der Strömungsrichtung, auf ein Radialleitrad 12 mit Radialleitschaufeln 15 dargestellt. Das Radialleitrad 12 ist in dem Innenraum des Läufers 1 angeordnet und mittels einer Kreisscheibe 13 auf der zentrischen Achse 2 befestigt. Die Kreisschreibe 13 ist im wesentlichen eben ausgebildet und kann formschlüssig oder mittels eines Fügeverfahrens mit der zentrischen Achse 2 verbunden sein. Die an der Scheibe 13 vorgesehenen, mit dem Radialleitrad 12 verbundenen Radialleitschaufeln 15 erstrecken sich an ihrem inneren Ende radial zur zentrischen Achse 2 und weisen insgesamt die Form einer logarithmischen Spirale auf, so daß sie sich mit ihrem äußeren Ende tangential zum Umfang des Radialleitrads 12 erstrecken. Eine derartige Ausbildung der Radialleitschaufeln 15 bewirkt, daß die Gasströmung bei Erreichen der nächsten Verdichterstufe unter der Verbrennungskammer eine sehr geringe oder minimalste Drehkomponente aufweist.

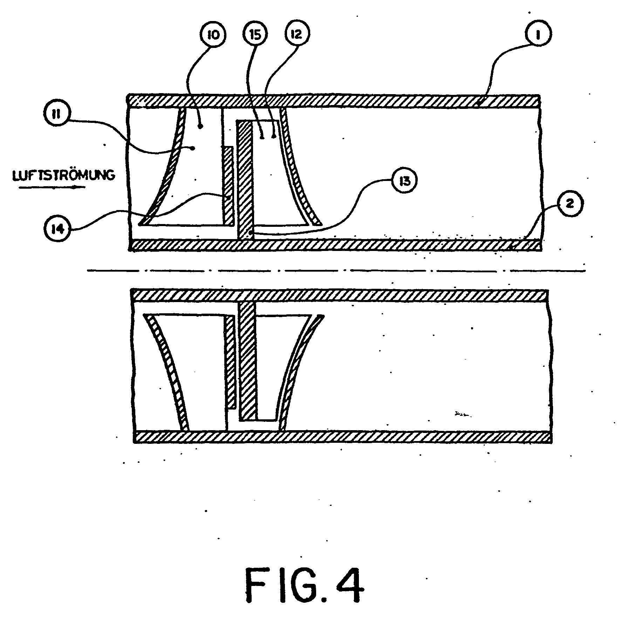

In Fig. 4 ist in schematischer Darstellung im Längsschnitt ein Teil einer Ausführungsform der erfindungsgemäßen Strömungsmaschine dargestellt, welcher einen Teil eines Radialverdichters oder einer Radialturbine bildet. Die zentrische Achse 2 ist in geeigneter Weise gelagert und trägt eine Kreisscheibe 13, an welcher ein Radialleitrad 12 ausgebildet ist, welches mit Radialleitschaufeln 15 versehen ist. Die Form der Radialleitschaufeln 15 und des Radialleitrads 12 ist dabei im einzelnen in Fig. 3 bereits beschrieben worden. In Strömungsrichtung vor der Leitradanordnung ist an dem die zentrische Achse 2 umgebenden Läufer 1 ein Radiallaufrad 10 mit Laufschaufeln 11 und einer Kreisscheibe 14 befestigt, wobei diese Teile im einzelnen im Zusammenhang mit der Fig. 2 bereits beschrieben wurden. Die spezielle axiale Ausgestaltung und der Abstand zwischen dem Radiallaufrad 10 und dem Radialleitrad 12 wird durch die Druckverhältnisse und durch die thermodynamischen Eigenschaften des Gasstroms bestimmt. Diese Darstellung in Fig. 4 zeigt lediglich eine schematische Ausgestaltungsform, welche sowohl bei einem Radialverdichter als auch bei einer Radialturbine zur Verwendung kommen kann. Ebenso ist es möglich, eine erfindungsgemäße Strömungsmaschine mit mehreren derartig ausgestalteten Radialverdichterstufen oder Radialturbinenstufen zu versehen.

Bei den gezeigten Ausführungsbeispielen ist die Lagerung der zeitrischen Achse 2 im einzelnen nicht dargestellt worden, sie kann den entsprechenden Bedürfnissen der einzelnen Anwendungsfälle angepaßt werden. Weiterhin ist außerhalb des Läufers 1 kein weiteres Gehäuse dargestellt, welches diesen Läufer 1 umgibt. Bei Verwendung der erfindungsgemäßen Strömungsmaschine in Form eines Strahltriebwerks ist diese Strömungsmaschine selbstverständlich in einer entsprechenden Außenverkleidung des Luftfahrzeugs untergebracht. Bei Verwendung der erfindungsgemäßen Strömungsmaschine für einen stationären Betrieb braucht aus funktionstechnischen Gründen um den Läufer 1 kein Gehäuse vorgesehen werden, dies wäre lediglich auch Sicherheitsgründen zu empfehlen. Weiterhin ist es im Rahmen des Erfindungsgedankens möglich, eine erfindungsgemäße Strömungsmaschine so auszugestalten, daß diese eine Kombination von axial und radial wirkenden Verdichterstufen oder Turbinenstufen aufweist. Weiterhin ist auch die Lagerung des Läufers 1 gegen die zentrische Achse 2 in einem weiten Bereich variabel.

**Patentansprüche**

1. Strömungsmaschine, umfassend einen Verdichter, eine Brennkammer und eine Turbine, mit einer feststehenden Achse (2), die zentral angeordnet ist, die sich in Strömungsrichtung erstrekt und deren Außenumfang als Strömungsführungsfläche dient, und die im wesentlichen radial nach außen weisende Leitschaufeln (4, 6, 8A; 15) trägt, und mit einem drehbar gelagerten Läufer (1), der den beschaufelten Bereich der zentrischen Achse (2) umschließt, und der ausschließlich von dem Läufer (1) im wesentlichen radial nach innen weisende Laufschaufeln (3, 7, 11) aufweist, dadurch gekennzeichnet, daß der Läufer (1) ausschließlich über mit diesem verbundene Streben, die sich radial zur zentrischen Achse (2) erstrecken, an der zentrischen Achse (2) gelagert ist, daß die zentrische Achse (2) als durchgehendes zylindrisches Rohr mit konstanten radialen Abmessungen seines Außenumfanges ausgebildet ist, und daß der Läufer (1) ebenfalls konstante radiale Abmessungen aufweist.

2. Strömungsmaschine nach Anspruch 1, dadurch gekennzeichnet, daß die Streben in Form von Schaufeln ausgebildet sind.

3. Strömungsmaschine nach Anspruch 2, dadurch gekennzeichnet, daß im Inneren der zentrischen Achse (2) Treibstoffleitungen und/oder elektrische Leitungen vorgesehen sind.

4. Strömungsmaschine nach Anspruch 2 oder 3, dadurch gekennzeichnet, daß die zentrische Achse (2) in ihrem Inneren kühlbar ist.

5. Strömungsmaschine nach Anspruch 1, dadurch gekennzeichnet, daß der drehbare Läufer (1) mittels mindestens einem am jeweiligen radial inneren Ende der Laufschaufeln (3, 7, 11) angeordneten Lager an der zentrischen Achse (2) gelagert ist.

6. Strömungsmaschine nach einem der Ansprüche 1 bis 5, dadurch gekennzeichnet, daß diese in Form eines Strahltriebwerks ausgebildet ist, dessen Verdichter als Axialverdichter ausgebildet ist, dem die Brennkammer (5) nachgeschaltet ist und dessen Turbine als Axialturbine ausgebildet ist.

7. Strömungsmaschine nach Anspruch 6, dadurch gekennzeichnet, daß der Axialverdichter in Form eines zweistufigen Verdichters ausgebildet ist.

8. Strömungsmaschine nach Anpruch 6, dadurch gekennzeichnet, daß die Brennkammer (5) an der zentrischen Achse (2) befestigt ist.

9. Strömungsmaschine nach Anspruch 8, dadurch gekennzeichnet, daß die Brennkammer (5) gegen die zentrische Achse (2) mittels eines Hitzeschutzes (8) isoliert ist.

10. Strömungsmaschine nach Anspruch 6, dadurch gekennzeichnet, daß die dem Auslaß (9A) der Axialturbine zugewandte letzte Anordnung von Leitschaufeln (8A) in Form von den austretenden Luftstrom in Axialrichtung lenkenden Leitschaufeln ausgestaltet sind.

11. Strömungsmaschine nach einem der Ansprüche 1 bis 5, dadurch gekennzeichnet, daß diese mit einem Radialverdichter und/oder einer Radialturbine ausgestattet ist.

12. Strömungsmaschine nach Anspruch 11, dadurch gekennzeichnet, daß die sich im wesentlichen radial erstreckenden Leitschaufeln (11) an einem Radiallaufrad (10) ausgebildet sind.

13. Strömungsmaschine nach Anspruch 11, dadurch gekennzeichnet, daß die Leitschaufeln (15) an einem Radialleitrad (12) ausgebildet sind und die Form einer logarithmischen Spirale aufweisen, wobei sie jeweils an ihrem inneren Ende radial zur zentrischen Achse (2) und an ihrem äußeren Ende tangential zum Läufer (1) ausgebildet sind.

**Revendications**

1. Turbomachine comprenant un compresseur, une chambre de combustion et une turbine, comportant une axe fixe (2) qui est disposé de façon centrale en s'étendant dans le sens du flux et dont la périphérie extérieure sert de surface de guidage pour le flux, et qui porte des aubes directrices (4, 6, 8A; 15) dirigées vers l'extérieur sensiblement radialement, et comportant un rotor monté de manière rotative qui entoure la zone munie d'aubes de l'axe central (2) et qui présente des aubes mobiles (3, 7, 11) dirigées sensiblement radialement vers l'intérieur exclusivement à partir du rotor (1), caractérisée par le fait que le rotor (1) est monté sur l'axe central (2) exclusivement par l'intermédiaire de jambes reliées à celui-là, qui s'étendent radialement par rapport à l'axe central (2), que l'axe central (2) a la forme d'un tube cylindrique continu dont la périphérie extérieure présente des dimensions radiales constantes, et que le rotor (1) présente également des dimensions radiales constantes.

2. Turbomachine selon la revendication 1, caractérisée par le fait que les jambes présentent une conformation d'aubes.

3. Turbomachine selon la revendication 2, caractérisé par le fait qu'à l'intérieur de l'axe central (2) sont prévus des conduits de carburant et/ou des conducteurs électriques.

4. Turbomachine selon la revendication 2 ou 3, caractérisée par le fait que l'axe central (2) est susceptible d'être refroidi à l'intérieur.

5. Turbomachine selon la revendication 1, caractérisée par le fait que le rotor (1) est monté sur l'axe central (2) au moyen d'au moins un palier disposé à l'extrémité radialement intérieure de chaque aubes mobiles (3, 7, 11).

6. Turbomachine selon l'une des revendications 1 à 5, caractérisée par le fait que celle-ci a une conformation de turboréacteur dont le compresseur est du type axial, auquel fait suite en aval la chambre de combustion (5) et dont la turbine est une turbine du type axial.

7. Turbomachine selon la revendication 6, caractérisée par le fait que le compresseur axial a une conformation de compresseur à deux étages.

8. Turbomachine selon la revendication 6, caractérisée par le fait que la chambre de combustion (5) est fixée à l'axe central (2).

9. Turbomachine selon la revendication 8, caractérisée par le fait que la chambre de combustion (5) est isolée par rapport à l'axe central (2) à l'aide d'un moyen de protection (8) contre la chaleur.

10. Turbomachine selon la revendication 6, caractérisée par le fait que les aubes directrices (8A) disposées dans le dernier groupement d'aubes directrices dirigées vers la sortie (9A) de la turbine axiale se présentent sous forme d'aubes directrices qui orientent dans le sens axial le flux d'air sortant.

11. Turbomachine selon l'une des revendications 1 à 5, caractérisée par le fait que celle-ci est équipée d'un compresseur radial et/ou d'une turbine radiale.

12. Turbomachine selon la revendication 11, caractérisée par le fait que les aubes directrices (11) qui s'étendent sensiblement radialement sont formées sur une roue mobile radiale (10).

13. Turbomachine selon la revendication 11, caractérisée par le fait que les aubes directrices (15) sont formées sur une roue directrice radiale (12) et présentent la forme d'une spirale logarithmique, leur forme étant telle qu'à leur extrémité intérieure elles se présentent radialement par rapport à l'axe central (2) et qu'à leur extrémité extérieure, elles se présentent tangentiellement par rapport au rotor (1).

## Claims

1. A fluid flow engine, comprising a compressor, a combustion chamber, and a turbine, having a centrally disposed stationary shaft (2) which extends in the direction of flow and the outer periphery of which acts as a flow guide surface, and which bears substantially radially outwardly extending stator blades (4, 6, 8a; 15), and comprising a rotatably mounted rotor (1) which encloses the bladed zone of the central shaft (2), and which has rotor blades (3, 7, 11) extending substantially radially inwards solely from the rotor (1), characterised in that the rotor (1) is mounted on the central shaft (2) solely by way of struts connected thereto and extending radially of the central shaft (2), in hhat the central shaft (2) is constructed as a continuous cylindrical tube having constant radial dimensions in respect of its outer periphery, and in that the rotor (1) also has constant radial dimensions.

2. A fluid flow engine according to Claim 1, characterised in that the struts are constructed in the form of blades.

3. A fluid flow engine according to Claim 2, characterised in that fuel lines and/or electrical lines are provided inside the central shaft (2).

4. A fluid flow engine according to Claim 2 or 3, characterised in that the interior of the central shaft (2) is coolable.

5. A fluid flow engine according to Claim 1, characterised in that the rotatable rotor (1) is mounted on the central shaft (2) by means of at least one bearing disposed at the associated radially inner end of the rotor blades (3, 7, 11).

6. A fluid flow engine according to any one of Claims 1 to 5, characterised in that it is constructed in the form of a jet power unit, the compressor of which is constructed as an axial compressor downstream of which is disposed the combustion chamber (5), and the turbine of which is constructed as an axial turbine.

7. A fluid flow engine according to Claim 6, characterised in that the axial compressor is constructed in the form of a two-stage compressor.

8. A fluid flow engine according to Claim 6, characterised in that the combustion chamber (5) is fixed on the central shaft (2).

9. A fluid flow engine according to Claim 8, characterised in that the combustion chamber (5) is insulated from the central shaft (2) by a heat shield (8).

10. A fluid flow engine according to Claim 6, characterised in that the last array of stator blades (8A) facing the axial turbine exhaust (9A) is constructed in the form of stator blades axially guiding the emerging air flow.

11. A fluid flow engine according to any one of Claims 1 to 5, characterised in that it is equipped with a radial compressor and/or a radial turbine.

12. A fluid flow engine according to Claim 11, characterised in that the substantially radially extending stator blades (11) are formed on a radial rotor (10).

13. A fluid flow engine according to Claim 11, characterised in that the stator blades (15) are formed on a radial stator (12) and have the form of a logarithmic spiral, each being formed radially to the central shaft (2) at the inner end and tangentially to the rotor (1) at their outer end.

FIG. I

# FIG. 2

FIG. 3

FIG. 4